# EUROPÄISCHE PATENTSCHRIFT

(11) **EP 2 567 121 B1**
(45) Veröffentlichungstag und Bekanntmachung des Hinweises auf die Patenterteilung: **04.03.2015**
(21) Anmeldenummer: 11718006.7
(22) Anmeldetag: 28.04.2011
(51) Int. Cl.: F16F 15/131, F16F 15/134, F16H 45/02, F16F 7/10, F16F 15/14

(54) **DREHMOMENTÜBERTRAGUNGSANORDNUNG FÜR DEN ANTRIEBSSTRANG EINES FAHRZEUGS**
TORQUE TRANSMISSION ARRANGEMENT FOR THE DRIVE TRAIN OF A VEHICLE
AGENCEMENT DE TRANSFERT DE COUPLE POUR LA CHAÎNE CINÉMATIQUE D'UN VÉHICULE

(30) Priorität: 07.05.2010 DE 102010028735
(43) Veröffentlichungstag der Anmeldung: 13.03.2013
(73) Patentinhaber: ZF Friedrichshafen AG, 88038 Friedrichshafen (DE)
(72) Erfinder: SASSE, Christoph, 97422 Schweinfurt (DE)
(86) Internationale Anmeldenummer: PCT/EP2011/056714
(87) Internationale Veröffentlichungsnummer: WO 2011/138216

(56) Entgegenhaltungen:
- DE-A1- 3 439 701
- DE-A1- 3 607 398
- DE-A1- 3 741 701
- DE-A1- 10 236 752
- DE-A1-102008 049 105
- DE-A1-102008 057 648
- DE-A1-102009 042 837
- JP-A- 62 194 050

## Beschreibung

Die vorliegende Erfindung betrifft eine Drehmomentübertragungsanordnung für den Antriebsstrang eines Fahrzeugs, welche einen mit einem Antriebsorgan, wie z. B. eine Antriebswelle, zur Drehung um eine Drehachse zu koppelnden Antriebsbereich und einen Abtriebsbereich umfasst, der vermittels einer zwischen dem Antriebsbereich und dem Abtriebsbereich wirksamen Dämpferelementenanordnung bezüglich des Antriebsbereichs um eine Drehachse drehbar ist. Dabei kann die Dämpferelementenanordnung an den Abtriebsbereich angekoppelt sein und an den Antriebsbereich angekoppelt oder beispielsweise vermittels einer Reibelementenanordnung mit diesem koppelbar sein.

Derartige allgemein auch als Anfahrelemente bezeichnete Drehmomentübertragungsanordnungen, wie z. B. hydrodynamische Drehmomentwandler, Fluidkupplungen oder nasslaufende Kupplungen, beispielsweise auch in einem Hybridantriebsmodul, weisen aufgrund des Vorhandenseins einer Dämpferelementenanordnung im Drehmomentübertragungsweg die Möglichkeit auf, in einem Antriebsstrang auftretende Drehungleichförmigkeiten bzw. Drehschwingungen zu bedämpfen.

Um Schwingungsanregungen verstärkt entgegenzuwirken, ist es weiterhin bekannt, so genannte Festfrequenztilger einzusetzen. Diese allgemein Feder-Masse-Pendeleinheiten umfassenden Festfrequenztilger, die im Allgemeinen selbst nicht in den Drehmomentübertragungsweg einer derartigen Drehmomentübertragungsanordnung eingekoppelt sind, sondern vermittels ihrer Federanordnungen an den Drehmomentübertragungsweg angekoppelt sind, so dass bei Auftreten von Drehschwingungen die Masseanordnungen der Feder-Masse-Pendeleinheiten schwingen können, können auf in einem Antriebsstrang zu erwartende Anregungsfrequenzen abgestimmt werden und somit zu einer bevorzugten Eliminierung derselben beitragen.

Aus der JP 62 194050 A ist eine Drehmomentübertragungsanordnung bekannt, bei welcher eine an einem Antriebsorgan drehfest aufgenommene Schwungmasse eine Reibungskupplung trägt, die eine Kupplungsscheibe und eine dieselbe axial beaufschlagende Anpressfeder aufweist. Die Anpressfeder dient, abhängig von der Betätigung, zur Herstellung oder zur Aufhebung einer Reibverbindung zwischen einer Druckplatte der Reibungskupplung sowie einer Anpressfläche der Schwungmasse einerseits und Reibbelägen der Kupplungsscheibe andererseits. Bei bestehender Reibverbindung wird von der Schwungmasse aufgenommenes Drehmoment ebenso wie damit überlagerte Torsionsschwingungen von den Reibbelägen über eine Dämpferelementenanordnung der Kupplungsscheibe an eine Nabe der Kupplungsscheibe übertragen, wobei die Nabe mit einem Abtriebsbereich der Drehmomentübertragungsanordnung drehverbunden ist. Die Nabe der Kupplungsscheibe und damit der Abtriebsbereich greift über eine Hebelverbindung reibend an einer Feder-Masse-Pendeleinheit an, die auf der Schwungmasse drehbar gelagert ist, und über Feder-Masseanordnungen verfügt, von denen zwei in Reihenschaltung zueinander angeordnet sind. Anders als die Dämpferelementenanordnung der Kupplungsscheibe ist die Feder-Masse-Pendeleinheit außerhalb des Weges der Momentenübertragung angeordnet.

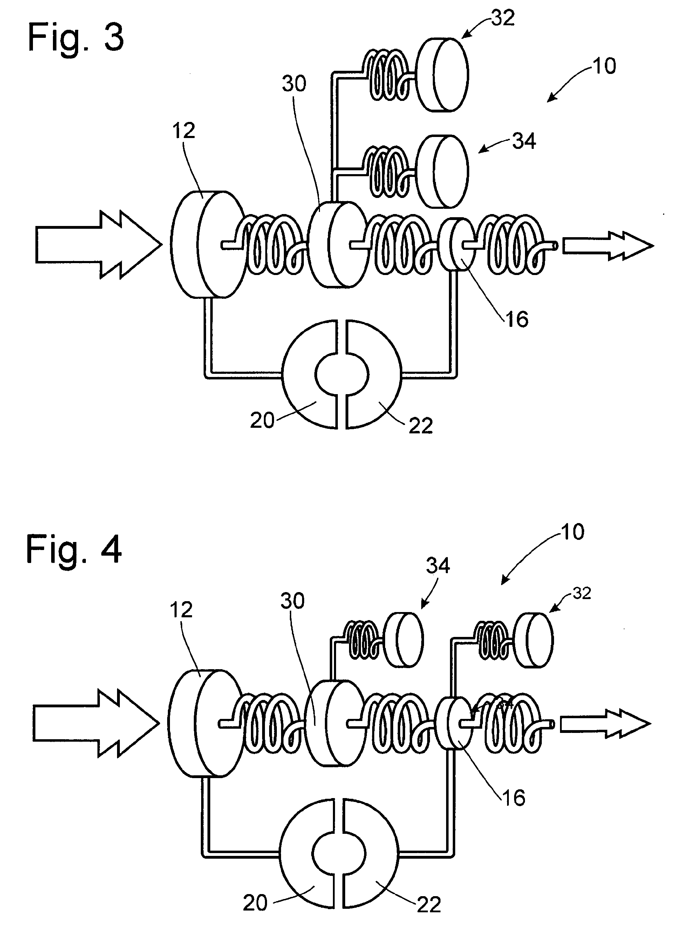

Die DE 10 2008 049 105 A1 zeigt eine Drehmomentübertragungsanordnung, bei welcher eine an einem Antriebsorgan drehfest aufgenommene erste Schwungmasse über eine Dämpferelementenanordnung mit einer als Abtriebsbereich wirksamen zweiten Schwungmasse verbunden ist. Gemäß einer in Fig. 4 abgebildeten speziellen Ausgestaltung ist die Dämpferelementenanordnung mehrstufig, wobei eine an der ersten Schwungmasse angreifende Federstufe über zwei Dämpferelementenbereiche verfügt, die durch eine Masse voneinander getrennt sind. Der abtriebsseitige Dämpferelementenbereich dieser Federstufe ist über eine weitere Masse mit einer Dämpfungsstufe verbunden, auf die schließlich eine weitere Federstufe folgt, die an der zweiten Schwungmasse angreift. Obwohl somit jedem Dämpferelementenbereich der ersten Federstufe jeweils eine Masse zugeordnet ist, ergibt sich keine Feder-Masse-Pendeleinheit wie bei der zuvor behandelten JP 62 194050 A, da sowohl die Dämpferelementenbereiche als auch die Massen jeweils innerhalb des Weges der Momentenübertragung angeordnet sind.

Auch die DE 37 41 701 A1 zeigt eine Drehmomentübertragungsanordnung, bei welcher eine an einem Antriebsorgan drehfest aufgenommene erste Schwungmasse über eine Dämpferelementenanordnung mit einer als Abtriebsbereich wirksamen zweiten Schwungmasse verbunden ist. Gemäß einer in Fig. 4 abgebildeten speziellen Ausgestaltung ist der zweiten Schwungmasse eine Feder-Masse-Pendeleinheit zugeordnet, wobei die Masse über zwei mittels einer Trägerplatte voneinander getrennte Federanordnungen an der zweiten Schwungmasse angreift. Die Feder-Masse-Pendeleinheit, die sich außerhalb des Weges der Momentenübertragung befindet, verfügt weiterhin über eine Dämpfungsvorrichtung.

Durch die DE 34 39 701 A1 ist ein Antriebsstrang mit einer Drehmomentübertragungsanordnung in Form einer Kupplungsscheibe bekannt, deren Antriebsbereich über Reibbeläge und deren Abtriebsbereich über eine Nabe verfügt, wobei zwischen An- und Abtriebsbereich eine Dämpferelementenanordnung vorgesehen ist. Weiterhin sind dem Abtriebsbereich außerhalb des Weges der Momentenübertragung wirksame Feder-Masse-Pendeleinheiten zugeordnet.

Aus der DE 102 36 752 A1 ist ein Antriebsstrang mit einem hydrodynamischen Drehmomentwandler bekannt, welcher über einen so genannten Turbinentorsionsdämpfer an eine Getriebeeingangswelle angekoppelt ist. An den im Wesentlichen auch den Ausgangsbereich des Turbinentorsionsdämpfer umfassenden Abtriebsbereich dieses hydrodynamischen Drehmomentwandlers ist eine Feder-Masse-Pendeleinheit, also ein Festfrequenztilger, angekoppelt.

Aus der DE 10 2008 057 648 A1 ist eine in Form eines hydrodynamischen Drehmomentwandlers ausgebildete Drehmomentübertragungsanordnung bekannt, bei welcher im Drehmomentenfluss zwischen einer Gehäuseanordnung, also einem Antriebsbereich, und einer Abtriebsnabe, also einem Abtriebsbereich, eine Überbrückungskupplung und eine Torsionsschwingungsdämpferanordnung mit zwei seriell wirksamen Torsionsschwingungsdämpfern vorgesehen ist. An eine zwischen diesen beiden Torsionsschwingungsdämpfern gebildete Zwischenmassenanordnung ist das Turbinenrad und mit dieser ein drehzahladaptiver Tilger angekoppelt. Bei ausgerückter Überbrückungskupplung, also Drehmomentübertragung über das Turbinenrad, die Zwischenmassenanordnung und den zweiten Torsionsschwingungsdämpfer zum Abtriebsbereich, kann die Primärseite des hier nicht im Drehmomentenfluss liegenden ersten Torsionsschwingungsdämpfers, welche an den Abtriebsbereich der Überbrückungskupplung fest angebunden ist, schwingen, so dass hier eine Feder-Masse-Pendeleinheit gebildet ist, wenn die Überbrückungskupplung ausgerückt ist.

Die DE 10 2009 042 837 A1 offenbart einen hydrodynamischen Drehmomentwandler, bei welchem im Drehmomentenfluss zwischen der Überbrückungskupplung und mithin dem Antriebsbereich und einer Abtriebsnabe und mithin dem Abtriebsbereich eine Torsionsschwingungsdämpferanordnung mit zwei seriell wirksamen Torsionsschwingungsdämpfern wirksam ist. Das Turbinenrad ist über eine Federanordnung an eine Zwischenmassenanordnung zwischen den beiden Torsionsschwingungsdämpfern angekoppelt. Zumindest dann, wenn die Überbrückungskupplung eingerückt ist, bildet das Turbinenrad mit dieser Federanordnung eine Masse-Feder-Pendeleinheit, die bezüglich der Zwischenmassenanordnung schwingen kann. Dabei bildet das Turbinenrad zusammen mit einem drehzahladaptiven Tilger im Wesentlichen die Masseanordnung für die Feder-Masse-Pendeleinheit.

Die US 2006/0272466 A1 offenbart einen Torsionsschwingungsdämpfer mit einer Nabe, die an die Kurbelwelle einer Brennkraftmaschine angebunden werden kann und zwei Trägheitsmasseelementen, die unabhängig voneinander vermittels jeweiliger elastischer Elemente an die Nabe angebunden sind. Somit kann dieser Torsionsschwingungsdämpfer auf zwei verschiedene Schwingungsanregungsfrequenzen abgestimmt werden.

Die US 2010/0106335 A1 offenbart einen Schwingungsdämpfer mit einer beispielsweise an einer Kardanwelle in einem Antriebsstrang festzulegenden Nabe. An dieser ringartig ausgebildeten Nabe ist vermittels eines gleichermaßen ringartig ausgebildeten elastischen Elements eine erste ringartige Masse getragen. Diese erste ringartige Masse ist radial außen umgeben von einem weiteren ringartigen elastischen Element, das wiederum an seiner Außenseite eine ringartige zweite Masse trägt.

Es ist die Aufgabe der vorliegenden Erfindung, eine Drehmomentübertragungsanordnung für den Antriebsstrang eines Fahrzeugs vorzusehen, welche bei einfachem und kompaktem Aufbau zu einer verbesserten Entkopplungsgüte bei der Drehmomentübertragung führt.

Diese Aufgabe wird gelöst durch eine Drehmomentübertragungsanordnung für den Antriebsstrang eines Fahrzeugs, umfassend einen mit einem Antriebsorgan, insbesondere Antriebswelle, zur Drehung um eine Drehachse zu koppelnden Antriebsbereich, einen über eine Dämpferelementenanordnung mit dem Antriebsbereich gekoppelten oder koppelbaren und im Kopplungszustand gegen die Rückstellwirkung der Dämpferelementenanordnung um die Drehachse bezüglich des Antriebsbereichs drehbaren Abtriebsbereich sowie wenigstens zwei Feder-Masse-Pendeleinheiten jeweils mit einer Federanordnung und einer gegen die Rückstellwirkung der Federanordnung auslenkbaren Masseanordnung.

Die Drehmomentübertragungsanordnung umfasst wenigstens zwei Feder-Masse-Pendeleinheiten, also so genannte Festfrequenztilger, die voneinander unabhängig auf verschiedene Anregungsfrequenzen abgestimmt werden können und diese, ohne dabei selbst ein Drehmoment zu übertragen, durch Schwingungsanregung zumindest teilweise eliminieren können. Durch die voneinander unabhängige Ausgestaltung der beiden Feder-Masse-Pendeleinheiten kann einerseits eine bauliche Unterbringung dort, wo genügend Bauraum zur Verfügung steht, leichter realisiert werden, andererseits wird die Ankopplung dieser Feder-Masse-Pendeleinheiten an hinsichtlich Schwingungsanregungen besonders kritische Bereiche eines Antriebsstrangs bzw. der Drehmomentübertragungsanordnung erleichtert.

Die Dämpferelementenanordnung kann einen ersten Dämpferelementenbereich, einen zweiten Dämpferelementenbereich und dazwischen eine Zwischenmassenanordnung umfassen.

Dabei kann vorgesehen sein, dass wenigstens eine, vorzugsweise mehrere, beispielsweise alle Feder-Masse-Pendeleinheiten an die Zwischenmassenanordnung angekoppelt sind.

Dabei kann die vorangehend bereits angesprochene weitergehende bzw. mehrstufige Dämpfungscharakteristik leicht erreicht werden, indem die Torsionsschwingungsdämpferanordnung einen ersten Torsionsschwingungsdämpfer mit einer den Eingangsbereich bereitstellenden ersten Primärseite und einer gegen die Wirkung des ersten Dämpferelementenbereichs bezüglich der ersten Primärseite drehbaren ersten Sekundärseite sowie einen zweiten Torsionsschwingungsdämpfer mit einer zweiten Primärseite und einer gegen die Wirkung des zweiten Dämpferelementenbereichs bezüglich der zweiten Primärseite drehbaren und den Ausgangsbereich bereitstellenden zweiten Sekundärseite umfasst, wobei die erste Sekundärseite und die zweite Primärseite wenigstens einen Teil der Zwischenmassenanordnung bereitstellen.

Es kann vorgesehen sein, dass wenigstens eine Feder-Masse-Pendeleinheit an den Abtriebsbereich angekoppelt ist, im Drehmomentenfluss also auf die Dämpferelementenanordnung der Drehmomentübertragungsanordnung folgt, wobei hier Bezug genommen ist auf den Zugzustand, in welchem ein Drehmoment von einem Antriebsaggregat in den Antriebsbereich eingeleitet und über den Abtriebsbereich beispielsweise an ein Getriebe weitergegeben wird.

Bei einer besonders vorteilhaften Ausgestaltungsvariante können mehrere, vorzugsweise alle Feder-Masse-Pendeleinheiten an den Abtriebsbereich angekoppelt sein.

Bei einer hinsichtlich der Entkopplungsgüte bei Übertragung eines Drehmoments über die Dämpferelementenanordnung besonders vorteilhaften Ausgetaltung kann vorgesehen sein, dass mehrere, vorzugsweise alle Feder-Masse-Pendeleinheiten an den Abtriebsbereich angekoppelt sind.

Wenn wenigstens eine Feder-Masse-Pendeleinheit über wenigstens eine andere Feder-Masse-Pendeleinheit angekoppelt ist, dann kann diese wenigstens eine Feder-Masse-Pendeleinheit masseerhöhend für eine andere oder wenigstens eine andere Feder-Masse-Pendeleinheit genutzt werden.

Der Antriebsbereich der erfindungsgemäßen Drehmomentübertragungsanordnung kann eine mit Fluid gefüllte oder füllbare Gehäuseanordnung umfassen, mit welcher ein Pumpenrad um die Drehachse drehbar sein kann und in welcher ein Turbinenrad angeordnet sein kann. Bei derartiger Ausgestaltung kann zur Erreichung einer Funktionenverschmelzung dann das Turbinenrad wenigstens einen Teil einer Masseanordnung einer Feder-Masse-Pendeleinheit bilden, also durch eine Federanordnung an den Drehmomentübertragungsweg angekoppelt sein.

Dabei sind verschiedene bauliche Ausgestaltungen abhängig von der zu erreichenden Dämpfungscharakteristik auswählbar. So kann das Turbinenrad an den Abtriebsbereich oder an die Zwischenmassenanordnung angekoppelt sein.

Um bei einfacher baulicher Ausgestaltung die Integration der Dämpferelementenanordnung in den Drehmomentenfluss zwischen den Antriebsbereich und den Abtriebsbereich schalten zu können, wird vorgeschlagen, dass im Drehmomentenfluss zwischen der Gehäuseanordnung und dem Abtriebsbereich eine Torsionsschwingungsdämpferanordnung mit einem Eingangsbereich, einem Ausgangsbereich und der dazwischen wirkenden Dämpferelementenanordnung vorgesehen ist.

Bei einer baulich sehr einfach zu realisierenden Ausgestaltungsvariante wird vorgeschlagen, dass wenigstens eine Feder-Masse-Pendeleinheit ein Zentralscheibenelement und an wenigstens einer Seite davon ein Deckscheibenelement, vorzugsweise beidseits davon miteinander verbundene Deckscheibenelemente, umfasst, wobei das wenigstens eine Deckscheibenelement gegen die Wirkung einer Federanordnung bezüglich des Zentralscheibenelements drehbar ist und wobei die wenigstens eine Feder-Masse-Pendeleinheit vermittels einer Baugruppe von Zentralscheibenelement und Deckscheibenelement, vorzugsweise Zentralscheibenelement, angekoppelt ist und an der anderen Baugruppe von Deckscheibenelement und Zentralscheibenelement, vorzugsweise Deckscheibenelement, wenigstens ein Teil einer Masseanordnung getragen ist. Hier kann also die vorliegende Erfindung für zumindest eine Feder-Masse-Pendeleinheit eine konstruktive Ausgestaltung nutzen, wie sie bereits bei Torsionsschwingungsdämpfern, welche in den Drehmomentenfluss integriert sind, bekannt ist.

Die vorangehend beschriebene Drehmomentübertragungsanordnung kann beispielsweise in Form eines hydrodynamischen Drehmomentwandlers, einer Fluidkupplung, einer nasslaufenden Kupplung oder eines Hybridantriebsmoduls realisiert sein.

Die vorliegende Erfindung wird nachfolgend mit Bezug auf die beiliegenden Figuren detailliert erläutert. Es zeigt:
Fig. 1 in prinzipartiger Darstellung eine Drehmomentübertragungsanordnung mit zwei Feder-Masse-Pendeleinheiten;
Fig. 2 eine konstruktive Ausführung einer Drehmomentübertragungsanordnung gemäß Fig. 1 als hydrodynamischer Drehmomentwandler;
Fig. 3 eine der Fig. 1 entsprechende prinzipartige Darstellung einer alternativen Ausgestaltungsart;
Fig. 4 eine der Fig. 1 entsprechende prinzipartige Darstellung einer alternativen Ausgestaltungsart;
Fig. 5 eine der Fig. 1 entsprechende prinzipartige Darstellung einer alternativen Ausgestaltungsart;
Fig. 6 eine der Fig. 1 entsprechende prinzipartige Darstellung einer alternativen Ausgestaltungsart;
Fig. 7 eine der Fig. 1 entsprechende prinzipartige Darstellung einer alternativen Ausgestaltungsart;
Fig. 8 eine der Fig. 1 entsprechende prinzipartige Darstellung einer alternativen Ausgestaltungsart;
Fig. 9 eine der Fig. 1 entsprechende prinzipartige Darstellung einer alternativen Ausgestaltungsart; und
Fig. 10 eine der Fig. 1 entsprechende prinzipartige Darstellung einer alternativen Ausgestaltungsart.

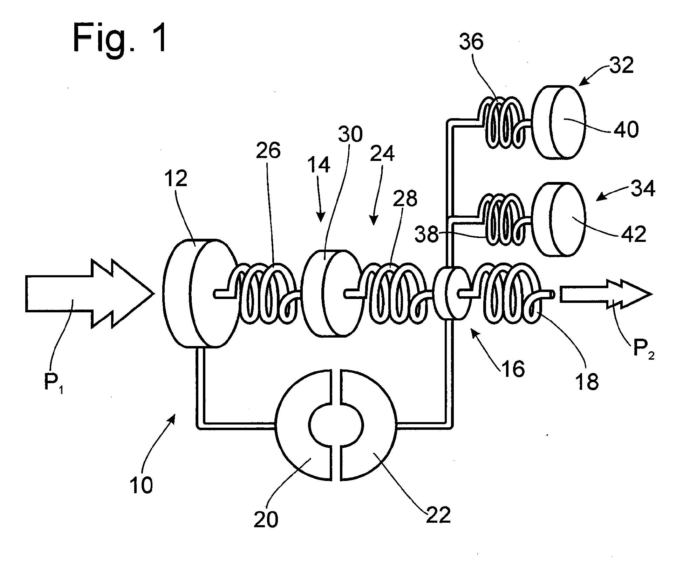

In Fig. 1 ist eine Drehmomentübertragungsanordnung 10 prinzipartig dargestellt. Diese hier beispielsweise als hydrodynamischer Drehmomentwandler ausgebildete Drehmomentübertragungsanordnung 10 umfasst einen Antriebsbereich 12, welcher, wie durch einen Pfeil P₁ angedeutet, zur Aufnahme eines Antriebsdrehmoments an eine Antriebswelle, wie z. B. eine Kurbelwelle einer Brennkraftmaschine, angebunden sein kann. Das Drehmoment wird vom Antriebsbereich 12 über eine Torsionsschwingungsdämpferanordnung 14 zu einem Abtriebsbereich 16 weitergeleitet, dieser ist beispielsweise mit einer Getriebeeingangswelle gekoppelt und gibt das Drehmoment, wie durch einen Pfeil P₂ angedeutet, an die Getriebeeingangswelle weiter. Deren Torsionselastizität ist in Form einer Feder 18 prinzipartig dargestellt.

Ein Pumpenrad 20 ist an den Antriebsbereich 12 angekoppelt. Ein Turbinenrad 22 ist an den Abtriebsbereich 16 angekoppelt.

Die Torsionsschwingungsdämpferanordnung 14 umfasst eine allgemein mit 24 bezeichnete Dämpferelementenanordnung. Diese ist aufgegliedert in zwei seriell wirksame Dämpferelementenbereiche 26, 28, welche über eine Zwischenmassenanordnung 30 miteinander verbunden sind. Der im Antriebs-, also Zugzustand stromaufwärts liegende Dämpferelementenbereich 26 ist, beispielsweise über eine Überbrückungskupplung oder dergleichen, an den Antriebsbereich 12 angekoppelt oder ankoppelbar. Der im Drehmomentenfluss folgende Dämpferelementenbereich 28 ist an den Abtriebsbereich 16 angekoppelt, an welchen auch das Turbinenrad 22 angekoppelt ist.

Die Drehmomentübertragungsanordnung 10 umfasst ferner zwei Feder-Masse-Pendeleinheiten 32, 34. Jede dieser Feder-Masse-Pendeleinheiten 32, 34 umfasst eine Federanordnung 36, 38 und eine Masseanordnung 40, 42. Die Federeinheiten 36, 38 können beispielsweise mit einer oder mehreren Schraubenfedern, insbesondere Schraubendruckfedern, ausgebildet sein. Eine oder beide dieser Federanordnungen 36, 38 können gleichwohl auch mit Zwischenelementen, wie z. B. Elastomermaterialelementen oder -lagen oder dergleichen ausgebildet sein.

Die beiden Feder-Masse-Pendeleinheiten 32, 34 sind an den Abtriebsbereich 16 angekoppelt, liegen jedoch in keinem Betriebszustand nicht im Drehmomentenfluss. Dies bedeutet, dass die Feder-Masse-Pendeleinheiten 32, 34 bzw. deren Masseanordnungen 40, 42 bei in den Abtriebsbereich 16 eingeleiteten Drehschwingungen zwar zum Schwingen angeregt werden können, gleichwohl jedoch selbst kein Drehmoment übertragen. Die Feder-Masse-Pendeleinheiten 32, 34 sind somit als so genannte Festfrequenztilger wirksam, deren Tilgungsfrequenz bzw. Tilgungscharakteristik durch Auswahl der Elastizitäten der Federanordnungen 36, 38 einerseits und der Masse der Masseanordnungen 40, 42 andererseits auf bestimmte Anregungsfrequenzen abgestimmt werden können. Dabei können die beiden Feder-Masse-Pendeleinheiten 32, 34 grundsätzlich auf die gleiche Anregungsfrequenz abgestimmt werden, was insbesondere dann von Vorteil ist, wenn bei einer bestimmten Anregungsfrequenz in einem Antriebsstrang sehr starke Anregungen zu erwarten sind. Besonders vorteilhaft ist jedoch die Abstimmung der beiden Feder-Masse-Pendeleinheiten 32, 34 auf verschiedene in einem Antriebsstrang zu erwartende Anregungsfrequenzen, so dass das Tilgungs- bzw. Dämfpungsspektrum erweitert werden kann.

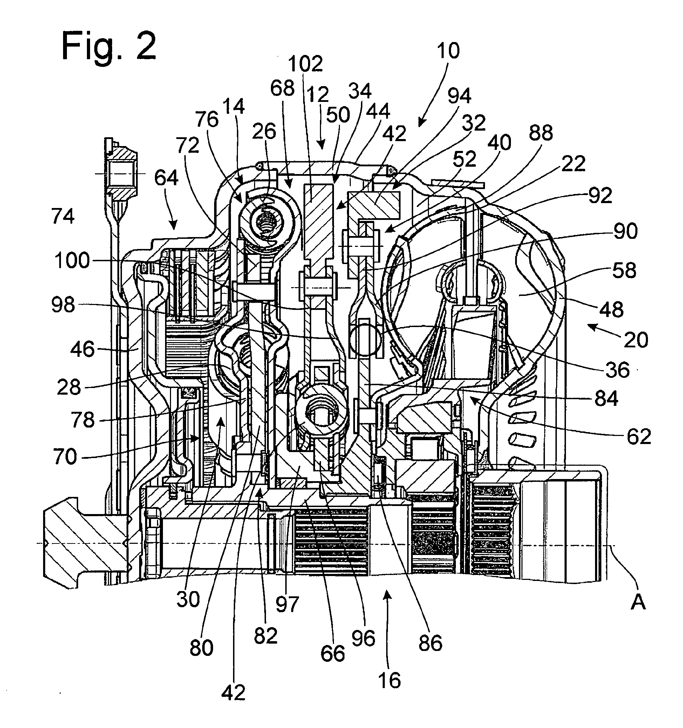

Die Fig. 2 zeigt in konstruktiver Ausführung eine Drehmomentübertragungsanordnung 10 als hydrodynamischer Drehmomentwandler. Der Eingangsbereich 12 ist im Wesentlichen bereitgestellt durch eine Gehäuseanordnung 44 mit einer antriebsseitig, also einem Antriebsaggregat zugewandt zu positionierenden Gehäuseschale 46, einer abtriebsseitig, also beispielsweise einem Getriebe zugewandt zu positionierenden Gehäuseschale 48. Diese beiden Gehäuseschalen 46, 48 können durch ein weiteres ringartiges Gehäuseteil 50 miteinander verbunden sein, so dass ein vollständig abgekapselter Innenraum 52 der Gehäuseanordnung 44 gebildet ist.

In diesem Innenraum 52 ist das Turbinenrad 22 angeordnet, das mit seinen Turbinenradschaufeln 56 an der Gehäuseschale 48 vorgesehenen Pumpenradschaufeln 58 axial gegenüberliegt. Mit diesen Pumpenradschaufeln 58 bildet die Gehäuseschale 48 das mit der Gehäuseanordnung 44 bzw. dem Antriebsbereich 12 um eine Drehachse A drehbares Pumpenrad 20. Radial innen liegt zwischen dem Pumpenrad 20 und dem Turbinenrad 22 ein allgemein mit 62 bezeichnetes Leitrad.

Über eine Überbrückungskupplung 64 und die Torsionsschwingungsdämpferanordnung 14 kann eine Drehmomentübertragungsverbindung zwischen der Gehäuseanordnung 44, also dem Antriebsbereich 12, und einer Abtriebsnabe 66 hergestellt werden, welche im Wesentlichen auch den Abtriebsbereich 16 bereitstellt.

Die Torsionsschwingungsdämpferanordnung 14 umfasst zwei seriell wirksame Torsionsschwingungsdämpfer 68, 70. Der im Drehmomentenfluss unmittelbar auf die Überbrückungskupplung 64 folgende, radial äußere Torsionsschwingungsdämpfer umfasst eine als Zentralscheibenelement ausgebildete erste Primärseite 72 und eine mit zwei miteinander fest verbundenen Deckscheibenelementen ausgebildete erste Sekundärseite 74. Die erste Primärseite 72 bildet gleichermaßen den Eingangsbereich 76 der Torsionsschwingungsdämpferanordnung 14.

In ihrem radial inneren Bereich bilden die beiden Deckscheibenelemente auch die zweite Primärseite 78 des zweiten Torsionsschwingungsdämpfers 70. Dessen zweite Sekundärseite 80 bildet auch den Ausgangsbereich 82 der Torsionsschwingungsdämpferanordnung 14 und ist beispielsweise durch Vernietung an die Abtriebsnabe 64 angebunden.

Die beiden Deckscheibenelemente bzw. die Primärseite 78 und die Sekundärseite 74 stellen bei diesem Aufbau gleichzeitig auch den wesentlichen Teil einer Zwischenmassenanordnung 30 der Torsionsschwingungsdämpferanordnung 14 bereit.

Zwischen der Primärseite 72 und der Sekundärseite 74 des radial äußeren Torsionsschwingungsdämpfers 68 wirkt der erste Dämpferelementenbereich 26, weicher beispielsweise bereitgestellt ist durch eine Mehrzahl von Schraubendruckfedern, die an jeweiligen Umfangsabstützbereichen der ersten Primärseite 72 und der ersten Sekundärseite 74 abgestützt und zur Ermöglichung einer Relativdrehung komprimierbar sind. Der zweite Dämpferelementenbereich 28 wirkt gleichermaßen zwischen der zweiten Primärseite 78 und der zweiten Sekundärseite 80 und kann ebenfalls eine Mehrzahl von Schraubendruckfedern umfassen.

Die beiden Feder-Masse-Pendeleinheiten 32, 34 sind axial nebeneinander und zwischen dem Turbinenrad 54 und der Torsionsschwingungsdämpferanordnung 14 angeordnet. Die Feder-Masse-Pendeleinheit 32 umfasst in ihrem radial inneren Bereich ein als Zentralscheibenelement 84 ausgebildetes Kopplungselement, das radial innen beispielsweise durch Verzahnungseingriff an der Abtriebsnabe 66, also dem Abtriebsbereich 16 drehfest gehalten ist und an einer Radialschulter desselben axial abgestützt ist. Das Leitrad 72 kann sich über eine Lagerung 86 axial an diesem Zentralscheibenelement 84 abstützen. Weiterhin erkennt man, dass das Turbinenrad 54 bzw. eine Turbinenradschale 88 desselben durch Vernietung oder dergleichen an dieses Zentralscheibenelement 84 angebunden ist und somit auch an den Abtriebsbereich 16 angekoppelt ist.

Im radial äußeren Bereich des Zentralscheibenelements 84 ist dieses beidseits von Deckscheibenelementen 90, 92 übergriffen. Diese sind in ihrem radial außerhalb des Zentralscheibenelements 84 liegenden Bereich miteinander und einer beispielsweise ringartig ausgebildeten Zusatzmasse 94 durch Vernieten oder dergleichen verbunden. Diese beiden Deckscheibenelemente 90, 92 und die Zusatzmasse 94 stellen im Wesentlichen die Masseanordnung 40 der Feder-Masse-Pendeleinheit 32 bereit. Die Federanordnung 36 dieser Feder-Masse-Pendeleinheit 32 kann, ähnlich wie dies bei den vorangehend beschriebenen Torsionsschwingungsdämpfern der Fall ist, eine Mehrzahl von Schraubendruckfedern umfassen, die in Umfangsrichtung an jeweiligen Abstützbereichen des Zentralscheibenelements 84 und der Deckscheibenelemente 90, 92 abgestützt sind und somit unter ihrer Kompression eine Umfangsrelativbewegung zwischen der Masseanordnung 40 und dem Zentralscheibenelement 84 ermöglichen, so dass die Masseanordnung 40 bezüglich des Abtriebsbereichs 16 schwingen kann.

Die Feder-Masse-Pendeleinheit 34 umfasst gleichermaßen ein Zentralscheibenelement 96, das in seinem radial inneren Bereich direkt oder unter Vermittlung eines Kopplungselements 97 beispielsweise an das Zentralscheibenelement 84 oder an die Abtriebsnabe 66 und mithin den Abtriebsbereich drehfest angekoppelt ist. Es werden dann die in Fig. 1 prinzipiell veranschaulichte Ankopplung beider Feder-Masse-Pendeleinheiten 32, 34 an den Abtriebsbereich 16 realisiert. Alternativ könnte das Zentralscheibenelement 96 bzw. Kopplungselement 97 auch an die Zwischenmassenanordnung 30, bereitgestellt durch zwei Deckscheibenelemente, angekoppelt sein, so dass eine Konfiguration erhalten werden kann, bei welcher eine Feder-Masse-Pendeleinheit 32 an den Abtriebsbereich 16 angekoppelt ist, während die andere Feder-Masse-Einheit an die Zwischenmassenanordnung 30 angekoppelt ist (eine derartige Anordnung ist in prinzipieller Form in Fig. 4 gezeigt). Beidseits des Zentralscheibenelements 96 liegen Deckscheibenelemente 98,100, die radial außen miteinander und einer beispielsweise ringartigen Zusatzmasse 102 verbunden sind und zusammen mit dieser die Masseanordnung 42 bereitstellen. Zwischen dem Zentralscheibenelement 96 und den Deckscheibenelementen 98, 100 wirkt die Federanordnung 42, welche wiederum mehrere in Umfangsrichtung aufeinander folgende, beispielsweise auch ineinander gestaffelt angeordnete Schraubendruckfedern umfassen kann. Somit ist auch die Masseanordnung 42 der Feder-Masse-Pendeleinheit 34 grundsätzlich unter Ermöglichung einer Schwingungsbewegung an den Abtriebsbereich 16 oder ggf. die Zwischenmassenanordnung 30 angekoppelt.

Man erkennt aus der vorangehenden Beschreibung, dass bei jeder der beiden als Festfrequenztilger ausgebildeten Feder-Masse-Pendeleinheiten 32, 34 die jeweiligen Massenanordnungen 40, 42 bei Auftreten von Drehschwingungen im Antriebsstrang bezüglich des Abtriebsbereichs 16 schwingen könnnen. Gleichwohl dient in jedem Betriebszustand keine der Feder-Masse-Pendeleinheiten 32, 34 selbst zur Drehmomentübertragung über ihre jeweiligen Federanordnungen hinweg. Insofern beispielsweise irgendeines der Zentralscheibenelemente dieser Feder-Masse-Pendeleinheiten dazu genutzt werden würde, im Drehmomentenfluss zwischen der Überbrückungskupplung 64 und der Abtriebsnabe 66 ein Drehmoment zu übertragen, so würde dies im vorangehend geschilderten Sinne die Übertragung eines Drehmoments über die jeweiligen Feder-Masse-Pendeleinheiten hinweg bedeuten, da deren Federanordnungen nicht in die Drehmomentübertragung einbezogen wären.

Bei dem vorangehend detailliert beschriebenem Aufbau ist es möglich, einerseits durch entsprechende Auslegung der beiden Torsionsschwingungsdämpfer 68 und 70 der Torsionsschwingungsdämpferanordnung 14 und andererseits durch Ausgestaltung der Feder-Masse-Pendeleinheiten 32, 34, insbesondere durch Abstimmung derselben auf verschiedene Anregungsfrequenzen, eine sehr breitbandige Tilgung bzw. Dämpfung und mithin eine verbesserte Entkopplungsqualität im Antriebsstrang zu erzielen.

Nachfolgend werden mit Bezug auf die Fig. 3 bis 10 verschiedene Variationsmöglichkeiten insbesondere hinsichtlich der Ankopplung von Feder-Masse-Pendeleinheiten an die drehmomentübertragenden Baugruppen einer Drehmomentübertragungsanordnung erläutert. Es sei bereits hier darauf hingewiesen, dass diese Prinzipien selbstverständlich nicht nur bei einem hydrodynamischen Drehmomentwandler, wie er in Fig. 2 als Anfahrelement dargestellt ist, zum Einsatz kommen können. Beispielsweise können auch Fluidkupplungen, also Anordnungen ohne Leitrad, nasslaufende Kupplungen, also Anordnungen ohne hydrodynamischen Kreislauf, bzw. Hybridantriebsmodule, die beispielsweise nasslaufende Kupplungen enthalten können, unter Berücksichtigung der Prinzipien der vorliegenden Erfindung aufgebaut werden.

In Fig. 3 sind die beiden Feder-Masse-Pendeleinheiten 32, 34 an die Zwischenmassenanordnung 30 angekoppelt und tragen mithin zur Erhöhung der Masse dieser Zwischenmassenanordnung 30 bei. Dabei kann die konstruktive Ausgestaltung grundsätzlich so sein, wie in Fig. 2 dargestellt. Die beiden nebeneinander liegenden Feder-Masse-Pendeleinheiten 32, 34 können beispielsweise im Bereich ihrer Deckscheibenelemente 84, 96 miteinander fest verbunden sein und auch an die die beiden Deckscheibenelemente umfassende Zwischenmassenanordnung 30 angebunden sein, während die Turbinenradschale 88 über ein entsprechendes Kopplungselement an die Abtriebsnabe 66 angekoppelt ist.

Bei der Ausgestaltungsform der Fig. 4 ist die Feder-Masse-Pendeleinheit 32 an den Abtriebsbereich 16, also beispielsweise die Abtriebsnabe 66 in Fig. 2 angekoppelt, während die Feder-Masse-Pendeleinheit 34 an die Zwischenmassenanordnung 30 angekoppelt ist. Bei dieser Ausgestaltungsvariante ist eine Beeinflussung der Schwingungsdämpfungscharakteristik nicht nur durch die Auswahl bzw. Auslegung der Feder-Masse-Einheiten 32, 34, sondern auch durch deren unterschiedliche Ankopplung an die drehmomentübertragenden Baugruppen möglich.

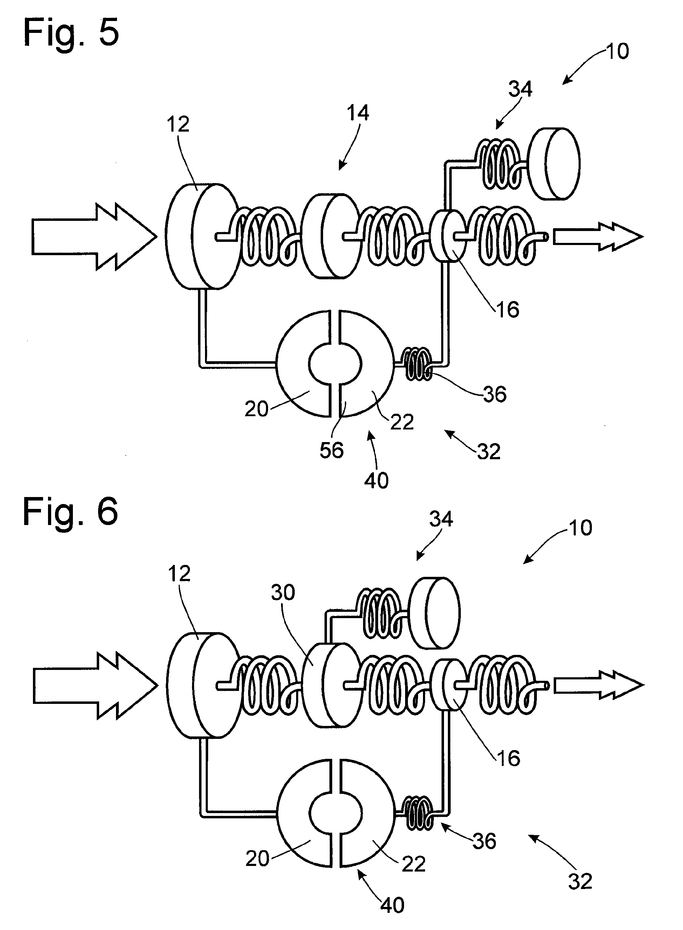

Die Fig. 5 zeigt eine Ausgestaltungsvariante, bei welcher beide Feder-Masse-Pendeleinheiten 32,34 wieder an den Abtriebsbereich 16, also beispielsweise die Abtriebsnabe 66 angekoppelt sind. Während die Feder-Masse-Pendeleinheit 34 so aufgebaut sein kann, wie vorangehend bereits erläutert, ist die Feder-Masse-Pendeleinheit 32 hier unter Miteinbeziehung des Tubinenrads 22 aufgebaut. Das heißt, die Masseanordnung 40 dieser Feder-Masse-Pendeleinheit 32 umfasst das Turbinenrad 22, also beispielsweise in Fig. 2 die Turbinenradschale 88 und die daran getragenen Turbinenradschaufeln 56. Insbesondere könnte die Turbinenradschale 88 eines der beiden Deckscheibenelemente bereitstellen, welche mit der Federanordnung 36 zusammenwirken.

Eine derartige Ausgestaltungsform ist insbesondere unter Berücksichtigung der Tatsache, dass das Turbinenrad 22 selbst zusätzlich auch als Massebauteil in einer derartigen Pendeleinheit genutzt wird, besonders bauraumsparend. Ein zusätzlicher Aspekt dabei ist, dass das Turbinenrad 22 mit seinen Turbinenradschaufeln 56 sich in dem im Innenraum 52 enthaltenen Fluid bewegt, was zusätzlich einen wesentlichen Dämpfungsbeitrag bei der Schwingungsbewegung der Masseeinheit 40 mit sich bringt, der selbstverständlich auch bei den anderen Ausgestaltungsvarianten vorhanden, jedoch nicht so ausgeprägt ist.

Eine Abwandlung der vorangehend beschriebenen Ausgestaltungsform ist in Fig. 6 gezeigt. Während auch hier die Masseanordnung 40 der Feder-Masse-Pendeleinheit 32 im Wesentlichen durch das Turbinenrad 22 bereitgestellt ist, ist die Feder-Masse-Pendeleinheit 34 an die Zwischenmassenanordnung 30 angekoppelt.

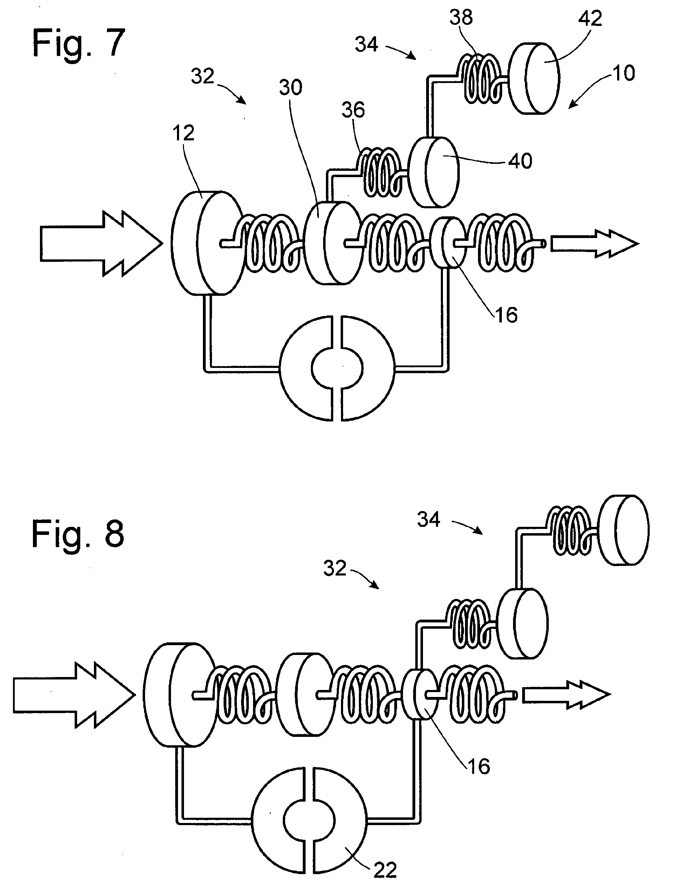

Eine weitere Variationsmöglichkeit ist in Fig. 7 gezeigt. Bei dieser Ausgestaltungsvariante sind beide Feder-Masse-Pendeleinheiten 32, 34 an die Zwischenmassenanordnung 30 angekoppelt. Dabei ist eine Anbindung der Federanordnung 36 der Feder-Masse-Pendeleinheit 32 an die Zwischenmassenanordnung 30 vorgesehen, während die Federanordnung 38 der Feder-Masse-Pendeleinheit 34 an die Masseanordnung 40 der Feder-Masse-Pendeleinheit 32 angebunden ist. Dies bedeutet, dass die Feder-Masse-Pendeleinheit 34 mit im Wesentlichen allen ihren Komponenten zur Erhöhung der Masse der Masseanordnung 40 der Feder-Masse-Pendeleinheit 32 beiträgt.

Eine ähnliche Anordnung ist in Fig. 8 gezeigt. Hier sind die beiden Feder-Masse-Pendeleinheiten 34 jedoch nicht an die Zwischenmassenanordnung 30, sondern an den Abtriebsbereich 16, also beispielsweise die Abtriebsnabe 66 in Fig. 2, angekoppelt, ebenso wie das Turbinenrad 22.

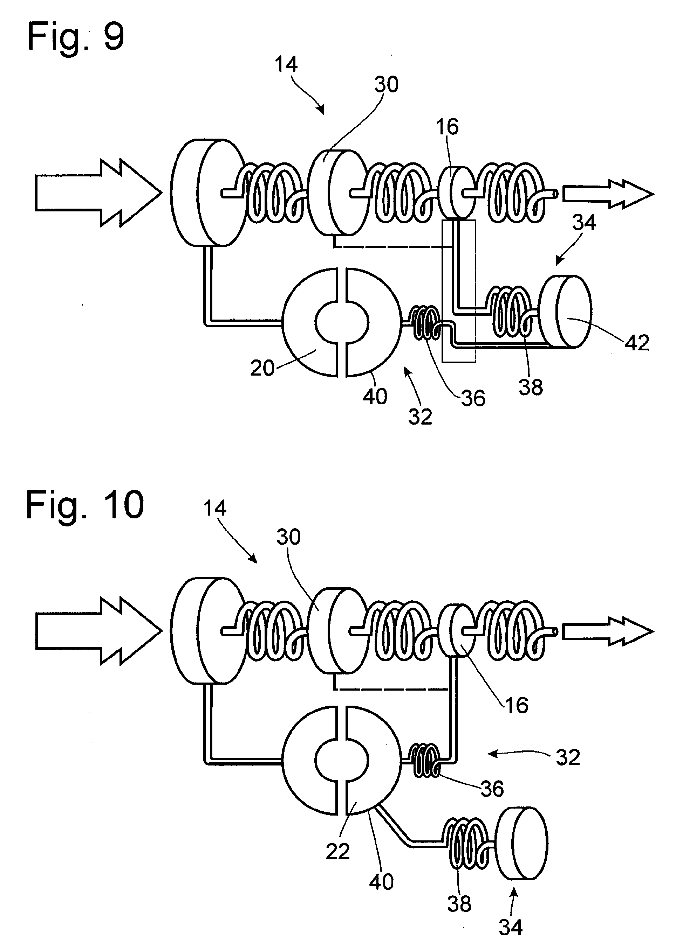

Die Fig. 9 zeigt eine Ausgestaltungsvariante, bei welcher die Feder-Masse-Pendeleinheit 34 an den Abtriebsbereich 16 angekoppelt ist. Die als wesentlichen Bestandteil ihrer Masseanordnung 40 das Turbinenrad 22 umfassende Feder-Masse-Pendeleinheit 32 ist an die Masseanordnung 42 der Feder-Masse-Pendeleinheit 34 angebunden bzw. stellt einen wesentlichen Bestandteil derselben bereit. Auf diese Art und Weise ist das Turbinenrad 22 wiederum an den Abtriebsbereich 16 angekoppelt, wenngleich über die beiden Elastizitäten der Federanordnungen 36, 38.

Wie durch eine Strichlinie in Fig. 9 verdeutlicht, könnte hier gleichermaßen auch eine Ankopplung der Feder-Masse-Pendeleinheit 34 an die Zwischenmassenanordnung 30 vorgesehen sein, so dass auch das Turbinenrad 22 an die Zwischenmassenanordnung 30 angekoppelt ist.

Bei der in Fig. 10 veranschaulichten Ausgestaltungsform ist die Feder-Masse-Pendeleinheit 32 an den Abtriebsbereich 16 angekoppelt und umfasst als wesentlichen Bestandteil ihrer Masseanordnung 40 das Turbinenrad 22. An dieses ist die Feder-Masse-Pendeleinheit 34 mit ihrer Federanordnung 38 angekoppelt.

Wie auch in Fig. 10 durch Strichlinie verdeutlicht, könnte auch hier die Feder-Masse-Pendeleinheit 32 bzw. deren Federanordnung 36 an die Zwischenmassenanordnung 30 angekoppelt sein.

Selbstverständlich könnten bei den vorangehend beschriebenen Ausgestaltungsformen verschiedenste Variationen vorgenommen werden. So könnte beispielsweise die Torsionsschwingungsdämpferanordnung 14 lediglich einstufig, also mit einem Torsionsschwingungsdämpfer aufgebaut sein. Grundsätzlich könnte bei allen Ausgestaltungsformen unabhängig von der Ankopplung der Feder-Masse-Pendeleinheiten das Turbinenrad immer auch an die Zwischenmassenanordnung 30 zwischen den beiden Torsionsschwingungsdämpfern angekoppelt sein. Weiter sei darauf hingewiesen, dass selbstverständlich auch mehr als die zwei dargestellten Feder-Masse-Pendeleinheiten vorgesehen sein können, sofern dies aus Bauraumgründen möglich und aus Gründen einer noch breitbandigeren Bedämpfung der in einem Antriebsstrang auftretenden Schwingungen vorteilhaft bzw. erforderlich ist.

Wenn die in Fig. 2 erkennbare Ausgestaltung der Feder-Masse-Pendeleinheiten mit einem Zentralscheibenelement und beidseits davon liegendem Deckscheibenelement aufgrund des symmetrischen Aufbaus besonders vorteilhaft ist, könnte auch nur an einer Seite des Zentralscheibenelements ein Deckscheibenelement positioniert sein, das, ebenso wie das Zentralscheibenelement, dann Abstützbereiche für die in Umfangsrichtung sich daran abstützenden Federn aufweisen kann.

## Patentansprüche

1. Drehmomentübertragungsanordnung für den Antriebsstrang eines Fahrzeugs, umfassend einen mit einem Antriebsorgan, insbesondere Antriebswelle, zur Drehung um eine Drehachse (A) zu koppelnden Antriebsbereich (12), der eine Gehäuseanordnung (44) umfasst, einen über eine Dämpferelementenanordnung (24) mit dem Antriebsbereich (12) gekoppelten und im Kopplungszustand gegen die Rückstellwirkung der Dämpferelementenanordnung (24) um die Drehachse (A) bezüglich des Antriebsbereichs (12) drehbaren Abtriebsbereich (16), wobei im Drehmomentenfluss zwischen der Gehäuseanordnung (44) und dem Abtriebsbereich (16) eine Torsionsschwingungsdämpferanordnung (14) mit einem Eingangsbereich (76), einem Ausgangsbereich (82) und der dazwischen wirkenden Dämpferelementenanordnung (24) vorgesehen ist,_sowie wenigstens zwei Feder-Masse-Pendeleinheiten (32, 34) jeweils mit einer Federanordnung (36, 38) und einer gegen die Rückstellwirkung der Federanordnung (36, 38) auslenkbaren Masseanordnung (40, 42), **dadurch gekennzeichnet, dass** die Dämpferelementenanordnung (24) einen ersten Dämpferelementenbereich (26), einen zweiten Dämpferelementenbereich (28) und dazwischen eine Zwischenmassenanordnung (30) umfasst, wobei die Torsionsschwingungsdämpferanordnung (14) einen ersten Torsionsschwingungsdämpfer (68) mit einer den Eingangsbereich (76) bereitstellenden ersten Primärseite (72) und einer gegen die Wirkung des ersten Dämpferelementenbereichs (26) bezüglich der ersten Primärseite (72) drehbaren ersten Sekundärseite (74) sowie einen zweiten Torsionsschwingungsdämpfer (70) mit einer zweiten Primärseite (78) und einer gegen die Wirkung des zweiten Dämpferelementenbereichs (28) bezüglich der zweiten Primärseite (78) drehbaren und den Ausgangsbereich (82) bereitstellenden zweiten Sekundärseite (80) umfasst, wobei die erste Sekundärseite (74) und die zweite Primärseite (78) wenigstens einen Teil der Zwischenmassenanordnung (30) bereitstellen.

2. Drehmomentübertragungsanordnung nach Anspruch 1, **dadurch gekennzeichnet, dass** wenigstens eine Feder-Masse-Pendeleinheit (32, 34) an den Abtriebsbereich (16) angekoppelt ist.

3. Drehmomentübertragungsanordnung nach Anspruch 1 oder 2, **dadurch gekennzeichnet, dass** mehrere, vorzugsweise alle Feder-Masse-Pendeleinheiten (32, 34) an den Abtriebsbereich (16) angekoppelt sind.

4. Drehmomentübertragungsanordnung nach Anspruch 1, **dadurch gekennzeichnet, dass** wenigstens eine Feder-Masse-Pendeleinheit (32, 34) an die Zwischenmassenanordnung (20) angekoppelt ist.

5. Drehmomentübertragungsanordnung nach Anspruch 4, **dadurch gekennzeichnet, dass** mehrere, vorzugsweise alle Feder-Masse-Pendeleinheiten (32, 34) an die Zwischenmassenanordnung (30) angekoppelt sind.

6. Drehmomentübertragungsanordnung nach einem der Ansprüche 1 bis 5, **dadurch gekennzeichnet, dass** wenigstens eine Feder-Masse-Pendeleinheit (32, 34) über wenigstens eine andere Feder-Masse-Pendeleinheit (32, 34) angekoppelt ist.

7. Drehmomentübertragungsanordnung nach Anspruch 1, **dadurch gekennzeichnet, dass** die Gehäuseanordnung (44) mit Fluid gefüllt oder füllbar ist.

8. Drehmomentübertragungsanordnung nach Anspruch 7, **dadurch gekennzeichnet, dass** mit der Gehäuseanordnung (44) ein Pumpenrad (20) um die Drehachse (A) drehbar ist und in der Gehäuseanordnung (44) ein Turbinenrad (22) angeordnet ist.

9. Drehmomentübertragungsanordnung nach Anspruch 8, **dadurch gekennzeichnet, dass** das Turbinenrad (22) wenigstens einen Teil einer Masseanordnung (40, 42) einer Feder-Masse-Pendeleinheit (32, 34) bildet.

10. Drehmomentübertragungsanordnung nach Anspruch 8 oder 9, **dadurch gekennzeichnet, dass** das Turbinenrad (22) an den Abtriebsbereich (16) angekoppelt ist.

11. Drehmomentübertragungsanordnung nach einem der Ansprüche 6 bis 9, **dadurch gekennzeichnet, dass** das Turbinenrad (22) an die Zwischenmassenanordnung (30) angekoppelt ist.

12. Drehmomentübertragungsanordnung nach einem der Ansprüche 1 bis 11, **dadurch gekennzeichnet, dass** wenigstens eine Feder-Masse-Pendeleinheit (32, 34) ein Zentralscheibenelement (84, 96) und an wenigstens einer Seite davon ein Deckscheibenelement (90, 92, 98, 100), vorzugsweise beidseits davon miteinander verbundene Deckscheibenelemente (90, 92, 98, 100) umfasst, wobei das wenigstens eine Deckscheibenelement (90, 92, 98, 100) gegen die Wirkung einer Federanordnung (36, 38) bezüglich des Zentralscheibenelements (84, 96) drehbar ist und wobei die wenigstens eine Feder-Masse-Pendeleinheit (32, 34) vermittels einer Baugruppe von Zentralscheibenelement (84, 96) und Deckscheibenelement (90, 92, 98, 100), vorzugsweise Zentralscheibenelement, angekoppelt ist und an der anderen Baugruppe von Deckscheibenelement (90, 92, 98, 100) und Zentralscheibenelement (82, 96), vorzugsweise Deckscheibenelement, wenigstens ein Teil einer Masseanordnung (40, 42) getragen ist.

13. Drehmomentübertragungsanordnung nach einem der Ansprüche 1 bis 12, **dadurch gekennzeichnet, dass** sie ausgebildet ist als:
- hydrodynamischer Drehmomentwandler,
- Fluidkupplung,
- nasslaufende Kupplung,
- Hybridantriebsmodul.

## Claims

1. Torque transmission arrangement for the drive train of a vehicle, comprising a drive region (12) which is to be coupled to a drive member, in particular drive shaft, for the rotation about an axis of rotation (A) and which comprises a housing arrangement (44), an output region (16) which is coupled to the drive region (12) via a damper element arrangement (24) and is rotatable in the coupling state, counter to the restoring action of the damper element arrangement (24), about the axis of rotation (A) with respect to the drive region (12), there being provided in the torque flux between the housing arrangement (44) and the output region (16) a torsional vibration damper arrangement (14) with an inlet region (76), with an outlet region (82) and with the damper element arrangement (24) acting between them, and also at least two spring-mass pendulum units (32, 34), each with a spring arrangement (36, 38) and with a mass arrangement (40, 42) deflectable counter to the restoring action of the spring arrangement (36, 38), **characterized in that** the damper element arrangement (24) comprises a first damper element region (26), a second damper element region (28) and, between them, an intermediate mass arrangement (30), the torsional vibration damper arrangement (14) comprising a first torsional vibration damper (68), with a first primary side (72) providing the inlet region (76) and with a first secondary side (74) rotatable with respect to the first primary side (72) counter to the action of the first damper element region (26), and a second torsional vibration damper (70), with a second primary side (78) and with a second secondary side (80) rotatable with respect to the second primary side (78) counter to the action of the second damper element region (28) and providing the outlet region (82), the first secondary side (74) and the second primary side (78) providing at least part of the intermediate mass arrangement (30).

2. Torque transmission arrangement according to Claim 1, **characterized in that** at least one spring-mass pendulum unit (32, 34) is coupled to the output region (16).

3. Torque transmission arrangement according to Claim 1 or 2, **characterized in that** a plurality of, preferably all, the spring-mass pendulum units (32, 34) are coupled to the output region (16).

4. Torque transmission arrangement according to Claim 1, **characterized in that** at least one spring-mass pendulum unit (32, 34) is coupled to the intermediate mass arrangement (20).

5. Torque transmission arrangement according to Claim 4, **characterized in that** a plurality of, preferably all, the spring-mass pendulum units (32, 34) are coupled to the intermediate mass arrangement (30).

6. Torque transmission arrangement according to one of Claims 1 to 5, **characterized in that** at least one spring-mass pendulum unit (32, 34) is coupled via at least one other spring-mass pendulum unit (32, 34).

7. Torque transmission arrangement according to Claim 1, **characterized in that** the housing arrangement (44) is filled or fillable with fluid.

8. Torque transmission arrangement according to Claim 7, **characterized in that** a pump impeller (20) is rotatable together with the housing arrangement (44) about the axis of rotation (A), and a turbine wheel (22) is arranged in the housing arrangement (44).

9. Torque transmission arrangement according to Claim 8, **characterized in that** the turbine wheel (22) forms at least part of a mass arrangement (40, 42) of a spring-mass pendulum unit (32, 34).

10. Torque transmission arrangement according to Claim 8 or 9, **characterized in that** the turbine wheel (22) is coupled to the output region (16).

11. Torque transmission arrangement according to one of Claims 6 to 9, **characterized in that** the turbine wheel (22) is coupled to the intermediate mass arrangement (30).

12. Torque transmission arrangement according to one of Claims 1 to 11, **characterized in that** at least one spring-mass pendulum unit (32, 34) comprises a central disc element (84, 96) and, on at least one side of this, a cover disc element (90, 92, 98, 100), preferably cover disc elements (90, 92, 98, 100) connected to one another on both sides thereof, the at least one cover disc element (90, 92, 98, 100) being rotatable with respect to the central disc element (84, 96) counter to the action of a spring arrangement (36, 38), and the at least one spring-mass pendulum unit (32, 34) being coupled by means of one sub-assembly of central disc element (84, 96) and of cover disc element (90, 92, 98, 100), preferably central disc element, and at least part of a mass arrangement (40, 42) being carried on the other sub-assembly of cover disc element (90, 92, 98, 100) and of central disc element (82, 96), preferably a cover disc element.

13. Torque transmission arrangement according to one of Claims 1 to 12, **characterized in that** it is designed as:
- a hydrodynamic torque converter,
- a fluid clutch,
- a wet-running clutch,
- a hybrid drive module.

## Revendications

1. Agencement de transfert de couple pour la chaîne cinématique d'un véhicule, comportant une région d'entraînement (12) devant être accouplée à un organe d'entraînement, en particulier à un arbre d'entraînement, en vue de la rotation autour d'un axe de rotation (A), laquelle région d'entraînement comporte un agencement de boîtier (44), une région de sortie (16) accouplée à la région d'entraînement (12) par le biais d'un agencement d'élément amortisseur (24) et pouvant tourner par rapport à la région d'entraînement (12) autour de l'axe de rotation (A) à l'encontre de l'action de rappel de l'agencement d'élément amortisseur (24) à l'état d'accouplement, un agencement d'amortisseur de vibrations de torsion (14) comprenant une région d'entrée (76), une région de sortie (82) et l'agencement d'élément amortisseur (24) agissant entre celles-ci étant prévu dans le flux de couple entre l'agencement de boîtier (44) et la région de sortie (16), ainsi qu'au moins deux unités pendulaires à ressort et masse (32, 34) comprenant chacune un agencement de ressort (36, 38) et un agencement de masse (40, 42) pouvant être dévié à l'encontre de l'action de rappel de l'agencement de ressort (36, 38), **caractérisé en ce que** l'agencement d'élément amortisseur (24) comporte une première région d'élément amortisseur (26), une deuxième région d'élément amortisseur (28) et un agencement de masse intermédiaire (30) entre celles-ci, l'agencement d'amortisseur de vibrations de torsion (14) comportant un premier amortisseur de vibrations de torsion (68) comprenant un premier côté primaire (72) produisant la région d'entrée (76) et un premier côté secondaire (74) pouvant tourner par rapport au premier côté primaire (72) à l'encontre de l'action de la première région d'élément amortisseur (26) ainsi qu'un deuxième amortisseur de vibrations de torsion (70) comprenant un deuxième côté primaire (78) et un deuxième côté secondaire (80) pouvant tourner par rapport au deuxième côté primaire (78) à l'encontre de l'action de la deuxième région d'élément amortisseur (28) et produisant la région de sortie (82), le premier côté secondaire (74) et le deuxième côté primaire (78) produisant au moins une partie de l'agencement de masse intermédiaire (30).

2. Agencement de transfert de couple selon la revendication 1, **caractérisé en ce qu'**au moins une unité pendulaire à ressort et masse (32, 34) est accouplée à la région de sortie (16).

3. Agencement de transfert de couple selon la revendication 1 ou 2, **caractérisé en ce que** plusieurs, de préférence toutes les unités pendulaires à ressort et masse (32, 34) sont accouplées à la région de sortie (16).

4. Agencement de transfert de couple selon la revendication 1, **caractérisé en ce qu'**au moins une unité pendulaire à ressort et masse (32, 34) est accouplée à l'agencement de masse intermédiaire (20).

5. Agencement de transfert de couple selon la revendication 4, **caractérisé en ce que** plusieurs, de préférence toutes les unités pendulaires à ressort et masse (32, 34) sont accouplées à l'agencement de masse intermédiaire (30).

6. Agencement de transfert de couple selon l'une quelconque des revendications 1 à 5, **caractérisé en ce qu'**au moins une unité pendulaire à ressort et masse (32, 34) est accouplée par le biais d'au moins une autre unité pendulaire à ressort et masse (32, 34).

7. Agencement de transfert de couple selon la revendication 1, **caractérisé en ce que** l'agencement de boîtier (44) est rempli ou peut être rempli de fluide.

8. Agencement de transfert de couple selon la revendication 7, **caractérisé en ce qu'**une roue de pompe (20) peut tourner avec l'agencement de boîtier (44) autour de l'axe de rotation (A) et une roue de turbine (22) est disposée dans l'agencement de boîtier (44).

9. Agencement de transfert de couple selon la revendication 8, **caractérisé en ce que** la roue de turbine (22) forme au moins une partie d'un agencement de masse (40, 42) d'une unité pendulaire à ressort et masse (32, 34).

10. Agencement de transfert de couple selon la revendication 8 ou 9, **caractérisé en ce que** la roue de turbine (22) est accouplée à la région de sortie (16).

11. Agencement de transfert de couple selon l'une quelconque des revendications 6 à 9, **caractérisé en ce que** la roue de turbine (22) est accouplée à l'agencement de masse intermédiaire (30).

12. Agencement de transfert de couple selon l'une quelconque des revendications 1 à 11, **caractérisé en ce qu'**au moins une unité pendulaire à ressort et masse (32, 34) comporte un élément de disque central (84, 96) et, sur au moins un côté de celui-ci, un élément de disque de recouvrement (90, 92, 98, 100), de préférence des éléments de disque de recouvrement (90, 92, 98, 100) reliés l'un à l'autre de part et d'autre de celui-ci, l'au moins un élément de disque de recouvrement (90, 92, 98, 100) pouvant tourner par rapport à l'élément de disque central (84, 96) à l'encontre de l'action d'un agencement de ressort (36, 38), et l'au moins une unité pendulaire à ressort et masse (32, 34) étant accouplée au moyen d'un ensemble parmi l'élément de disque central (84, 96) et l'élément de disque de recouvrement (90, 92, 98, 100), de préférence au moyen de l'élément de disque central, et sur l'autre ensemble parmi l'élément de disque de recouvrement (90, 92, 98, 100) et l'élément de disque central (82, 96), de préférence sur l'élément de disque de recouvrement, étant supportée au moins une partie d'un agencement de masse (40, 42).

13. Agencement de transfert de couple selon l'une quelconque des revendications 1 à 12, **caractérisé en ce qu'**il est réalisé en tant que :
- convertisseur de couple hydrodynamique,
- embrayage hydraulique,
- embrayage humide,
- module d'entraînement hybride.
